# EUROPEAN PATENT APPLICATION

(11) **EP 1 834 935 A1**
(43) Date of publication of application: **19.09.2007**
(21) Application number: 06425171.3
(22) Date of filing: 16.03.2006
(51) Int. Cl.: C04B 26/02, C04B 26/18, C04B 14/04, C04B 14/06, C04B 14/30, C04B 14/34, C04B 111/54

(54) **Wall and floor tiles and slabs consisting of agglomerated stone with photocatalytic properties**

(71) Applicant: QUARELLA S.p.A., 37135 Verona (IT)
(72) Inventor: Godi, Alessandro, 37135 Verona (IT); Tassone, Pierpaolo, 37135 Verona (IT)
(74) Representative: Alagem Modiano, Lara S.

(57) **Abstract**

This invention relates to an agglomerated stone product which, in its finished form, can be used as a flooring, wall covering or work surface able to interact with the surrounding environment by reducing the chemical or biological pollutants in the air and the bacteria with which the surfaces come into in contact, because a photocatalytic preparation of nanometre-sized titanium dioxide is added to its composition.
This self-decontaminating and self-cleaning effect is based on photochemical activity of anatase.
The artificial building material has a matrix of polyester resin.

## Description

### Field of application

This invention relates to coverings consisting of agglomerated materials to which photocatalytic preparations of titanium dioxide (TiO₂) in nanoparticle form are added. The invention also relates to the process for the preparation of said materials.

The products of the invention interact with the surrounding environment, reducing the content of bacteria, VOCs (Volatile Organic Components), the NOₓ type of nitrogen oxides and other atmospheric pollutants.

### Prior art

The manufacture of agglomerated stone products, designed for use in the building industry as floor and wall coverings or employed in furnishings as kitchen and bathroom tops or the like, is known.

These composite materials can be manufactured in the form of tiles, in slabs of over 4 metres square, with thicknesses ranging between 1 and 3 cm, or in blocks of up to 3 cubic metres in volume which are subsequently sawn into slabs.

The choice of geometry of the semi-manufactured product depends on the hardness of the starting raw materials, the required appearance of the finished product, and the productivity required of the manufacturing plant.

The starting raw materials are marble or limestone in general, granite, quartz and silica or feldspathic sands, which can be found in nature in large pieces which need to be crushed, or in granules and sands which have already been crushed by natural events; after being suitably sorted into appropriate grading envelopes (sizes), they are bound by synthetic polymers (such as unsaturated polyester resin).

Agglomerated stone products are manufactured by different forming technologies (vibration, compression, vibration plus compression), which can be conducted either at atmospheric pressure or under vacuum.

The most advanced technology currently involves the vibration and simultaneous compression of the mix, in forms (moulds) or on a belt, under vacuum.

The development of this technology has led to a considerable improvement in the technical and aesthetic qualities of products, due to the possibility of using a highly effective compacting means which forms the product with a drastic reduction in binder, in favour of the granular content.

All the forming techniques employed require raw materials which are "compatible" with one another for the manufacture of agglomerates, in order to "design" products with particular technical and aesthetic characteristics.

In this respect, agglomerates can be defined as composites, because they originate from a combination of two different materials: stone material (granulate) and binder.

Leaving aside all types of classification based on appearance, agglomerate products present a first subdivision based on the quality or type of stone granulate used, ie. whether it consists mainly of calcium carbonate (marble or limestone) or silica (granite, feldspar, quartz or silica sand).

The granulate influences the physical, chemical and mechanical characteristics of the finished product, such as the degree of water absorption, abrasion resistance and chemical resistance.

A second classification of agglomerated products can be based on the particle-size range of the granulates in the finished product, and above on their maximum size.

This is because the binder used, and in particular its quantity in the finished product, depends mainly on the maximum diameter of the granulate (in general, the larger the maximum diameter of the granulate, the smaller the binder content, and vice versa), and this influences other characteristics, such as flexural strength and the linear thermal expansion coefficient.

Despite the minimum content required by the forming technology, the presence of binder constitutes the vehicle whereby particular additives can be added, either as part of the manufacturing process or to improve the performance of the finished product.

Said additives must be chemically compatible with the polymer used as binder.

As demonstrated by the success obtained by this product on the market for many years, the improvement and optimisation of the technical characteristics of agglomerates have made these materials increasingly suitable for all applications in the construction and interior decoration industries, due to their compatibility with other construction materials and their chemical inertia towards the environment.

As a result of these characteristics they are given the trade definition of "aggregates" ("inert"), on a par with natural stone and ceramic tiles.

It is known that titanium dioxide can be used as a photocatalyst to reduce or eliminate organic pollutants.

More specifically, it is known that titanium dioxide, in the crystalline form of anatase, is a semiconductor oxide with high reactivity which can be activated by light radiation with a wavelength present in sunlight.

The use of anatase as a photocatalyst of organic pollutants has been known for some time.

Anatase is a semiconductor with a band gap at 3.2 eV: after excitation with a photon having a wavelength of less than 385 nm, it generates an electron hole on the surface of TiO₂.

The result of this process is the production of OH- radicals and the reduction of O₂ to superoxide ion (O²⁻), both of which are highly reactive on contact with organic compounds.

These radicals interact with the environment, generically reducing the pollutant content and destroying bacteria, thus effectively reducing bacterial contamination.

In the early 1980s, the first studies on the effect of TiO₂ particles on the destruction of bacteria in the presence of light allowed the photocatalysis process to be introduced as a disinfection method.

Growing interest in the potential of the favourable effects of the photodisinfection supplied by TiO₂ particles is extensively documented in the literature.

Studies have been conducted on different types of micro-organisms, such as viruses, bacteria, fungi and algae, and on cancer cells.

Its anti-bacterial effect has proved particularly effective on Gram-negative bacteria such as *Escherichia coli* and *Pseudomonas aeruginosa,* which are commonly found on work surfaces (kitchen tops, bathroom tops, and the like).

The antibacterial activity induced by light on titanium dioxide allows its use in deodorants, water and air purification, and the disinfection of various types of premises.

Other materials containing photocatalytic substances like titanium dioxide, such as grout, paint and plaster, for example, have given some interesting results in terms of reduction in nitrogen oxides (NO and NO₂), volatile organic compounds and other atmospheric pollutants.

Numerous publications illustrate the photocatalytic effect of anatase, in the presence of both solar and artificial UV irradiation, in promoting oxidation of many environmental pollutants such as NO_{x,} phenols, benzene, trichloroethylene, acetaldehyde, toluene and formaldehyde, thus producing an environmental "decontamination" which is of definite practical interest.

Other publications relate to the addition of anatase nanoparticles to asphalt for the construction of city roads and pavements, while others again relate to the use of anatase for covering similar surfaces.

Some authors have reported the photocatalytic effect of anatase in promoting oxidation of NOₓ to nitrates.

Other authors have demonstrated that a surface cleaned with TiO₂ can promote the removal of NOₓ gases from the atmosphere in the presence of sunlight, by oxidising them to nitrates.

The ability to break down gaseous benzene by catalytic means at ambient temperature has been tested in special reactors.

In another study, the combined effect of sunlight and titanium dioxide in the breakdown of trichloroethylene was observed.

Phenol, toluene and formaldehyde can also be eliminated by the combined effect of titanium dioxide and UV radiation.

The use of titanium dioxide nanoparticles having a photocatalytic action with the same purposes on materials such as marble, granite, stone in general and ceramic tiles is desirable for the reasons described above, but is hindered by the need to cover the surfaces of the stone materials with a titanium dioxide film a few microns thick to ensure an effective photocatalytic action and the consequent difficulty of guaranteeing the resistance of the film to the mechanical action of abrasion or the chemical action of deterioration, with a consequent loss of or reduction in photocatalytic properties.

### Object of the invention

This invention relates to agglomerated stone products which maintain unchanged, and in some cases actually improve, the chemical, physical and mechanical characteristics of the conventional materials currently known and used in construction and interior decoration, but can no longer be described as "inert" because, due to suitable modifications in their composition, they can interact with the environment into which they are introduced by reducing the content of VOCs (Volatile Organic Components) and other pollutants such as NOₓ nitrogen oxides in the air that surrounds them, and the bacteria with which the surfaces come into contact.

In general, this interaction consequently reduces or even eliminates bacteria on surfaces, and reduces or gradually eliminates the organic and inorganic atmospheric pollutants present in the environment that surrounds the product.

This can take the form of floors, walls or work surfaces (bathroom or kitchen surfaces (tops)).

The term "agglomerated stone" refers here to all materials included in the definition contained in European standard EN-14618.

The agglomerated stone according to the invention is obtainable, according to a first embodiment of the invention, by surface treating tiles or slabs of agglomerated material with a suitable film a few microns thick containing titanium dioxide nanoparticles previously dispersed in aqueous solutions or organic solvents.

According to a further embodiment of the invention, the agglomerates can by obtained by suitably modifying their formulation, choosing compatible vehicles for the addition of titanium dioxide nanoparticles.

This last alternative does not present any problems of adherence of the film to the surface or stability over time, but the first is simpler, as it does not involve any substantial modifications in the manufacture of agglomerates.

### Detailed description of the invention

The agglomerated stone according to the invention can be obtained by adding particles of titanium dioxide, preferably of nanometric size, to the agglomerates, at the preparation stage or as previously obtained by conventional techniques, for example by vibrocompacting the stone material in the presence of the resin and suitable crosslinking agents, adherence (adhesion) promoters and any pigments required.

The titanium dioxide particles can be added in the form of:
- powders;
- solutions in water (slurries);
- solutions in organic solvent.

The use of nanometre-sized powders is problematic due to the difficulty of handling them without dispersal into the environment and of successfully mixing particles with micrometer-sized granules with the finer powders of the mixes required for the manufacture of agglomerates.

The use of solutions in water (slurries) involves the addition of the solution to the fine powders of the mixes, their mixing and subsequent drying.

This technique represents an additional stage in the conventional agglomerate manufacturing line, and thus causes a considerable cost increase.

A more economical solution is the application of solutions in water directly to the finished product using a process of deposit which, in accordance with the known technique, comprises the following steps (performed continuously or discontinuously):
- preliminary dry cleaning or cleaning with water of the surface of the product,
- spraying of the solution of titanium dioxide nanoparticles with an airbrush or similar industrial system,
- subsequent elimination of solvent by drying.

It has surprisingly been found that whatever the solvent used to carry the titanium dioxide nanoparticles (water or organic solution), they cling to the surface of the agglomerated stone with an adherence which is not only due to mere physical cohesion between particles of solids.

Some authors, dealing with chemically different, but still nanometre-sized materials, have postulated the presence of a kind of "strong" bond between nanometre-sized powders and the different substrates on which they are deposited.

These "strong" bonds do not seem to be explained by the theories governing conventional chemical bonds.

A pre-requisite for the formation of these "strong" bonds is that the particles deposited are nanometre-sized, and consequently develop a very large surface contact area.

In this way, the surface film that forms has the characteristics of durability required by a product designed for the uses typical of agglomerated stone products.

It has also surprisingly been found that it is possible to obtain a perfect dispersion of titanium dioxide nanoparticles even if they are carried in the polymer constituting the binder resin required for the manufacture of the agglomerates, without any contraindications or interference with the subsequent crosslinking (hardening) process, using an organic solution compatible with the polymer.

Common monoethylene, diethylene, monopropylene, dipropylene or other alcohols or glycols, or monomers such as styrene, methyl methacrylate or others with different functional groups, especially acrylates or methacrylates with a suitable functional group, can be used as organic solvent.

The organic solution containing titanium dioxide must be mixed with the polymer under particular conditions of timing, temperature and mixing speed, in suitable reaction containers.

The mixing conditions fall approximately into the following ranges:
- time: 5 to 30 minutes;
- temperature: 15 to 40°C;
- mixing speed: 60 to 400 rpm/m.

To obtain stable solutions, i.e. not presenting precipitation problems, the concentration of nanometre-sized titanium dioxide in the solutions can range from a minimum of 2% to a maximum of 40%.

The use of titanium dioxide in the form of nanocrystalline anatase having the following characteristics is preferred:
- crystal size: 5 to 30 nm (1 nm = 10⁻⁹ m);
- specific surface area: 300 to 50 m²/g.

As an alternative to titanium dioxide, this invention also covers the use of other materials of nanometric size which, when added to the formulation of an agglomerated product, generate a product with marked characteristics of interaction with the environment: for example, the use of metallic silver in dimensions starting from 5 nm gives the agglomerate to which it is added considerable bactericidal characteristics against the main micro-organisms with which the product may come into in contact.

For all these alternatives to titanium dioxide nanoparticles, the method of carrying powders of nanometric size in the mixes needed to make the agglomerated stone products remains the same as previously described.

According to the invention, titanium dioxide nanoparticles can also be combined with metallic silver (or other metals) of nanometric size (doping agents).

This association gives rise to a synergic effect, with the result that the action of titanium dioxide is not necessarily activated in the presence of light radiation (photochemical process), but can also be activated by a chemical process.

Due to the use of said doping agents, the incorporation of metal ions consequently leads to a reduction in bacteria counts, nitrogen oxides (NO and NO₂), volatile organic compounds and other atmospheric pollutants, even in environments where no irradiation with sunlight occurs.

As there is currently no standardised method for characterising the efficiency of photocatalytic materials, the efficiency of the photocatalytic activity of the covering to which this invention relates can be evaluated by means of one of the following indicators:
- measurement of the change in concentration of an atmospheric pollutant;
- measurement of the reduction in the number of bacteria deposited on the surface;
- measurement of the contact angle of a drop of water and/or observation of the washability of a surface;
- measurement of the colour change of an organic stain;
- measurement of the formation of products of reaction from the breakdown of organic substances.

To measure the degree of pollution of enclosed premises, without any influence from the surrounding atmosphere, environmental research chambers with a volume of several cubic metres have been designed, which allowed precise control of parameters such as temperature, relative humidity, air quality and exchange: in this working area it was possible to evaluate the efficiency of the air scrubbing systems and perform evaluation studies.

Depending on the titanium dioxide content, the special coverings can "capture" organic and inorganic atmospheric pollutants following exposure to ultraviolet and/or solar radiation.

The broken down pollutants can then be eliminated in the form of water; depending on the titanium dioxide concentration added, the special coverings help to reduce, for example, the levels of nitrogen oxides (NOₓ), which cause respiratory problems and contribute to the formation of smog.

NOₓ gases and organic compounds come into contact with the surface of the special coverings, where the presence of titanium dioxide nanoparticles is activated by light radiation, breaking down the pollutants present and eliminating the products of reaction in the form of water and carbon dioxide.

The efficacy of the system is variable, depending on the spectrum and the intensity of the incident radiating power on the treated surface containing the photocatalytic substances.

This innovative technology for the elimination of environmental pollution was recognised by the Environment and Territory Ministry by Decree no. 045/2004 published in the Official Gazette of 9 April 2004.

The invention is described in detail in the following examples.

### Example 1 - Bactericidal effect of agglomerated stone cladding treated with titanium dioxide nanoparticles

The agglomerated stone product used for the tests took the form of a tile measuring 30 x 30 cm with a thickness of 12 mm.

The product had the following composition:
- feldspathic powders between 20 and 30% in volume
- quartz chippings between 50 and 65% in volume
- orthophthalic unsaturated polyester resin plus additives required for the crosslinking process (reaction catalysts, reaction accelerators (promoters), adherence (adhesion) promoters) between 15 and 20% in volume
- white pigment.

The product was formed by vibration and simultaneous compression under vacuum, and subsequently cross-linked at temperatures of between 60 and 100°C; it was then reduced to the necessary size for the experiment by cutting to the required format (dimension).

The quantity of nanometre-sized titanium dioxide deposited on the surface by spraying an aqueous solution is between 1 and 30 mg/m²

The reduction in the bacteria count was quantified by comparing the number of viable micro-organisms at time zero with those which were still viable after a contact time, such as 12 hours.

The actual contribution made by photocatalytic titanium dioxide to reducing the bacteria count was verified by comparing the data obtained from treated and untreated samples after exposure to UV radiation.

The entire experiment was conducted with a single species of Gram-negative bacteria (*Escherichia coli*)*.*

Before inoculation onto the surface, the special covering was exposed to irradiation with U.V. type A (320-400 nm) for 30 minutes; the inoculum on the surface was 10³ and 10⁴ CFU respectively; the solution deposited, containing the bacteria, was 100 microlitres.

After 12 hours, the survival rate of the bacterial species tested was nil.

### Example 2 - Bactericidal effect of agglomerated stone cladding treated with titanium dioxide nanoparticles

The agglomerated stone product used for the tests took the form of a tile measuring 30 x 30 cm with a thickness of 12 mm.

The product had the following composition:
- feldspathic powders between 20 and 30% in volume
- feldspar chippings between 50 and 65% in volume
- orthophthalic unsaturated polyester resin plus additives required for the crosslinking process (reaction catalysts, reaction accelerators (promoters), adherence (adhesion) promoters) between 15 and 20% in volume
- blue pigment.

The product was formed by vibration and simultaneous compression under vacuum, and subsequently cross-linked at temperatures of between 60 and 100°C; it was then reduced to the necessary size for the experiment by cutting to the required format (dimension).

The quantity of nanometre-sized titanium dioxide deposited on the surface by spraying an aqueous solution was between 1 and 30 mg/m².

The test was conducted with a single species of Gram-negative bacteria

### (Pseudomonas aeruginosa).

Before inoculation onto the surface, the special covering was exposed to irradiation with U.V. type A (30-400 nm) for 30 minutes; in this case the inoculum on the surface was 6x10⁴ CFU.

After 24 hours, the survival rate of the bacterial species tested was nil.

### Example 3

Special coverings made of agglomerated material, to which a suitable concentration of organic solutions containing titanium dioxide nanoparticles was added, demonstrated superhydrophilic and self-cleaning characteristics when the surfaces were soiled with products in common use such as grease, oil and ink; due to photocatalysis, the treated surfaces were also able to break down the organic matter, as was demonstrated by observing the disappearance of the typical colour of methylene blue.

Agglomerated stone manufactured by vibro-compression under vacuum and consisting of powders and chippings of different particle sizes chosen from among the following types (alone or combined):
- marble
- limestone
- granite
- feldspathic sand
- silica sand.

The maximum size of the chippings ranged between 0.5 and 150 mm.

The unsaturated polyester resin was the following type:
- orthophthalic
- dicyclopentadiene
- isophthalic
- neopentylic.

The crosslinking additives, as regards catalysts, were peroxides in a concentration of between 1 and 3% of the weight of the polyester resin, and as regards reaction accelerators (promoters), cobalt salts at the concentration of 0.05 to 0.3% of the weight of the polyester resin.

Conventional organofunctional silanes were introduced into some samples as adherence (adhesion) promoters.

The ratio between powders/chippings/binder was similar to that reported in the above examples.

The crosslinking of the resin, and consequently the hardening of the product, were performed both at ambient temperature and at temperatures of between 60 and 100°C.

In one case, the quantity of nanometre-sized titanium dioxide deposited on the surface by spraying an aqueous solution was between 1 and 30 mg/m².

In the second case, the quantity of nanometre-sized titanium dioxide which was introduced directly into the mix for direct mixing with the components during the manufacturing process, and consequently present on the surface, varied under the different test conditions, and is estimated at 0.5 to 1 mg/m².

The observations were performed at times ranging from 1 to 8 hours.

It was observed that both the photocatalytic effects (breakdown of organic substances by oxidation) and superhydrophilic effects (elimination of organic substances by means of water) were present simultaneously on the same surface in the pre-treated agglomerated material, since they were both activated by the presence of light radiation.

Two simultaneous phenomena which gave the material self-cleaning properties were therefore observed.

## Claims

1. Agglomerated stone products consisting of powders and granules of marble or limestone in general, granite, quartz and silica or feldspathic sands mixed with resins, **characterised in that** they contain a material able to interact chemically or photo-chemically with chemical or biological pollutants in contact with said products.

2. Products as claimed in claim 1, wherein the material able to interact chemically or photochemically with chemical or biological pollutants is titanium dioxide and/or metallic silver.

3. Products as claimed in claim 1 or 2, wherein the titanium dioxide or other catalytic material takes the form of nanoparticles.

4. Products as claimed in one of claims 1 to 3, wherein the material able to interact chemically or photochemically with chemical or biological pollutants is titanium dioxide.

5. Products as claimed in claim 2, 3 or 4, wherein the titanium dioxide is in the crystalline form of anatase.

6. Products as claimed in any of claims 1 to 5, wherein the resin is an unsaturated polyester resin.

7. Products as claimed in any of claims 1 to 6, wherein the material able to interact chemically or photo-chemically with chemical or biological pollutants is added to the mix consisting of powders and granules of marble or limestone in general, granite, quartz and silica or feldspathic sand, mixed with resins.

8. Products as claimed in any of claims 1 to 6, wherein the material able to interact chemically or photochemically with chemical or biological pollutants constitutes a surface layer of the agglomerated stone product.

9. Process for the preparation of the products as claimed in claims 1-7, which comprises the addition of a material able to interact chemically or photochemically with chemical or biological pollutants to the mix dispersed in an organic solvent compatible with the cross-linkable resin, and subsequent forming with conventional crosslinking and vibro-compacting techniques (compacting by vibro-compressure techniques followed of crosslinking).

10. Process for the preparation of the products as claimed in claims 1-7, which comprises the addition of a material able to interact chemically or photochemically with chemical or biological pollutants to the chippings before dispersal in the mix in aqueous solution, and subsequent drying, mixing, and forming with conventional crosslinking and vibro-compacting techniques (compacting by vibro-compressure techniques followed of crosslinking)..

11. Process as claimed in claim 9, wherein the organic solvent is selected from among alcohols, glycols, styrene, methyl methacrylate and methacrylates with a suitable functional group.

12. Process as claimed in claims 9-11, wherein the concentration of nanometre-sized titanium dioxide in the organic solvent ranges between 2% and 40% by weight.

13. Process as claimed in claims 9-11, wherein the concentration of nanometre-sized titanium dioxide and/or metallic silver in the organic solvent ranges between 2% and 40% by weight.

14. Process as claimed in claims 9-11, wherein the concentration of nanometre-sized titanium dioxide in aqueous solution ranges between 2% and 40% by weight.

15. Process as claimed in claims 9-11, wherein the concentration of nanometre-sized titanium dioxide and/or metallic silver in aqueous solution ranges between 2% and 40% by weight.

16. Process for the preparation of the products claimed in claims 1-7, which comprises the addition of material able to interact chemically or photochemically with chemical or biological pollutants in powder form to the mix, and subsequent mixing and forming with conventional crosslinking and vibro-compacting techniques (compacting by vibro-compressure techniques followed of crosslinking).
